# EUROPEAN PATENT SPECIFICATION

(11) **EP 1 262 724 B1**
(45) Date of publication and mention of the grant of the patent: **13.05.2009**
(21) Application number: 01500242.1
(22) Date of filing: 02.10.2001
(51) Int. Cl.: F25C 1/14, F16D 27/01

(54) **Icing machine with a magnetic drive for a scraping blade**
Eismaschine mit Magnetantrieb für ein Abstreifblatt
Machine à glace avec entraînement magnétique pour une lame de raclage

(30) Priority: 30.05.2001 ES 200101398 U
(43) Date of publication of application: 04.12.2002
(73) Proprietor: Sencotel S.L., 46722 Beniarjo (Valencia) (ES)
(72) Inventor: Sencotel S.L., 46722 Beniarjo (Valencia) (ES)
(74) Representative: Ghioni, Carlo Raoul Maria

(56) References cited:
- EP-A- 0 799 575
- FR-A- 2 391 393
- GB-A- 982 396
- US-A- 3 066 500
- US-A- 6 163 095

## Description

### Field of the invention

The present invention relates to an icing machine comprising a magnetic drive for scraping blade, according to the preamble of claim 1. Such an icing machine is disclosed in EP 799 575 A.

More specifically, the invention consists of an icing machine comprising a magnetic drive according to the features of claim 1.

### Background of the invention

At present there are in the marketplace a lot of icing machines used for making and dispensing the well known iced drinks or cold drinks at a very low temperature, almost at freezing point. These machines are typically made up of a tub enclosing an evaporator belonging to a refrigerator circuit. The evaporator has a cylindrical shape, and to avoid the building up of ice crystals on its surface it is surrounded by a scraping blade, normally of helical shape qnd moved by a motor reducer.

The above mentioned machines differ by the horizontal or vertical position of the evaporator and scraping blade system. In the case of the horizontal position, the motor reducer is located on one side of the tub, preferably the rear side, adjacent to its exterior side. The axle moving the blade passes through the tub wall by means of a watertight joint, so that the axle is enclosed in the evaporator and emerges in the opposite side of the latter. The end of the axle sustains a mechanical coupling, preferably by means of screws, with a disc or a similar part supporting the scraping blade, which is helical shaped and located around the external face of the evaporator.

This arrangement has the drawback of the beverage penetrating into the evaporator and reaching the drive axle and the watertight joint. Cleaning the axle when it is enclosed in the evaporator is difficult, and the joint can be damaged while using the machine as the liquid emerges and reaches the coupling position. In addition, cleaning the evaporator and the scraping blade becomes difficult because of the need to use tools to disassemble the scraping blade, as the access to the inside of the evaporator where the drink-impregnated drive axle is located is not easy.

An icing machine of the above mentioned type is described in EP 799 575 A. Said document discloses a machine for preparing and delivering frozen beverages in which there is an evaporator arranged longitudinally and whose essential feature is that coupling between the rotation axis of reduction motor and rotation axis of the propeller is of a magnetic type.

### Description of the invention

The icing machine comprising a magnetic drive for a scraping blade according to the present invention is designed as a means to maintain the evaporator inside watertight and isolated from the beverage. To achieve this end it is foreseen that the mechanical coupling of the drive transmiting power from the motor reducer to the scraping blade is made magnetically across through the separating wall of the evaporator and the tub space for containing the beverage.

In fact, this new invention foresees the evaporator being totally watertight with respect to the tub inside, and the longitudinally located inside driving axle to be separated from the liquid content of the tub. To this end, it is provided that the coupling of the end of the rotating axle is made with a magnetic clutch using magnets, instead of the conventional mechanical clutch using screws, pins or similar, requiring the use of tightness joints that are prone to damage and loss of eficiency.

The evaporator is placed horizontally and shows in its rear part the coupling to the tub wall where the conventional motor reducer is located. The reducer is directly coupled to a driving axle, which rests on the evaporator support and is enclosed in the isolating sleeve of the evaporator. This latter has an exterior watertight enclosure, extended from the evaporator support near the motor reducer to the opposite end, where the enclosure is closed.

In this end the enclosure bears an intermediate cylinder that has at its axis a double supporting stub. The end of the driving axle is located inside this intermediate cylinder, which acommodates a primary rotor of the magnetic clutch. The primary rotor is supported on the internal supporting stub to maintain its rotating stability and to avoid it jutting out, with a sliding bush around it. The primary rotor is formed by a cylindrical body of a ferromagnetic material, containing inside one or several permanent magnets with their poles directed towards the contour.

The secondary rotor is arranged around the primary one and is mechanically joined to the scraping blade, located in turn around the evaporator body. The secondary rotor is basically a support for one or several magnets, the magnetic poles of which face the poles of the magnets belonging to the primary rotor.

The axle moved by the motor reducer rotates the primary rotor, therefore rotating the magnetic fields of magnets the herein. The rotation of these magnetic fields produces the rotation of the secondary rotor, the magnets of which are magnetically coupled to the first ones across the watertight enclosure, which is permeable to the magnetic fields. As the secondary rotor turns, the scraping blade slides over the evaporator surface and eliminates ice crystals. The secondary rotor is supported by the external stub existing at the end of the enclosure.

In order for the present invention to be clearly comprehended, there will now be described a preferred embodiment thereof, given by way of example, with reference being made to the accompanying drawings.

### Brief description of the drawings

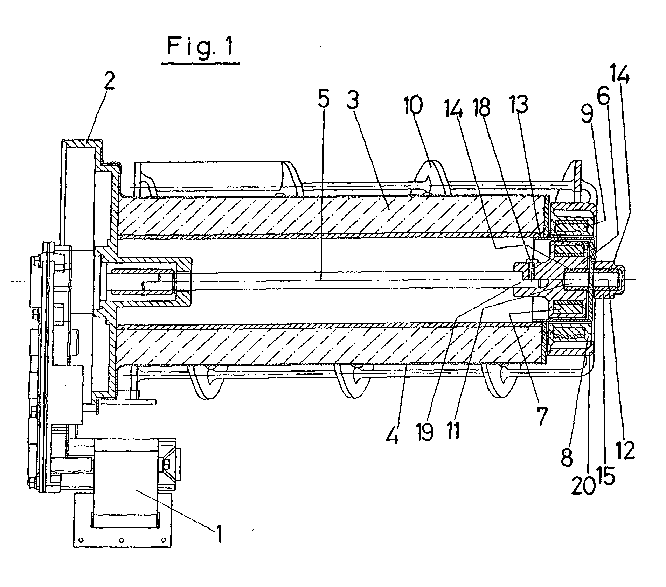

Figure 1 is a longitudinal section of the evaporator, the longitudinal axle, the magnetic drive and the helical scraping blade assembly.

Figure 2 is a longitudinal section of the primary rotor.

Figure 3 is a longitudinal section of the secondary rotor.

### Description of a preferred embodiment

In view of the above mentioned figures and according to the numbering adopted, a preferred but non limitative embodiment of the invention can be seen in said drawings.

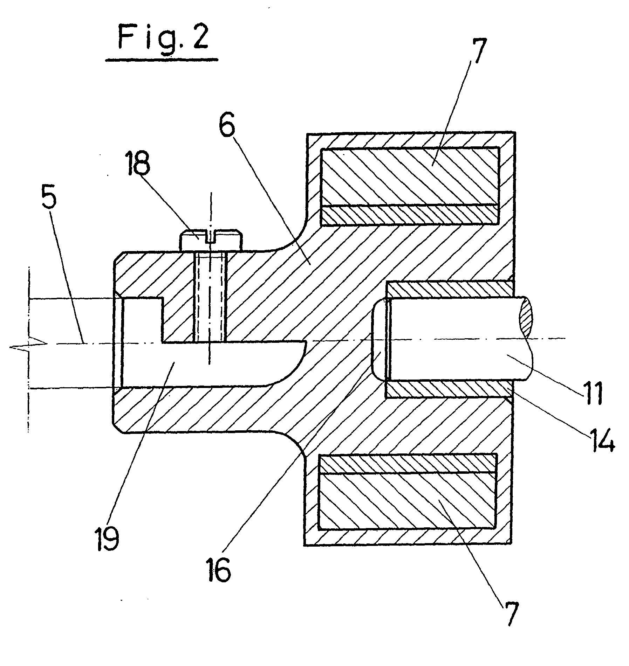

The novel drive includes a horizontal evaporator 3 sustained by a rear support 2 and having in its contour an enclosure 4 which extends from the support 2 and is watertight in its body and front end. A motor reducer 1 exists near the rear end of the device and meshes with one end of a longitudinal axle 5, which at the other end bears a primary rotor 5 (figure 2). This in turn bears on a stub 11 coaxially emerging from the inside face of an intermediate cylinder 13 projected from the enclosure 4.

The intermediate cylinder 13 is adapted to the enclosure 4 and is watertight around the primary rotor 6, being made of a magnetically permeable material.

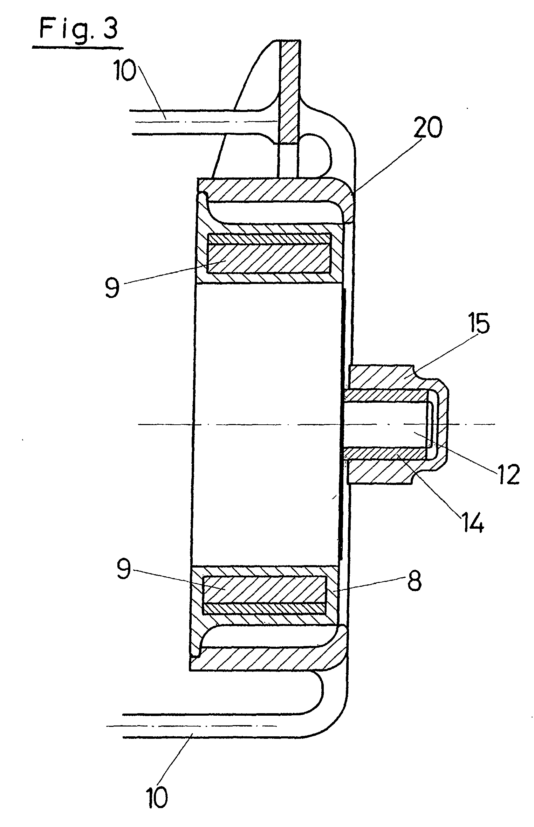

A secondary rotor 8 (figure 3), preferably ring-shaped, is arranged around the rotor 6 and the cylinder 13 and bears in its external contour a cover 20 linking with the helical scraping blade 10, which extends along and around the evaporator 3 and the enclosure 4. The front face of the enclosure 4 has, coaxially with the axle 4, a stub 12 emerging outwards and coupled to a support 15 around a friction bush 14. Support 15 is joined to the helical scraping blade 10 by means of the mentioned cover 20.

The primary rotor 6 is cylindrical and made of ferro-magnetic material, including in its periphery one or various magnets 7 with their magnetic poles oriented outwards. This primary rotor 6 has at one end a hole 16 coaxially arranged to receive the stub 11 integral of the enclosure 4, with the interposition of a friction bush 14, while at the other end the primary rotor 6 includes a mechanical fastening 19 of half round cross section for the axle 5, with the help of a screw 18 lodged in a threaded hole 17.

The secondary rotor 8 includes in the periphery of its internal contour either one or several magnets 9 with their poles facing the magnetic poles 7 of the primary rotor 7.

## Claims

1. AN ICING MACHINE comprising a magnetic drive for a scraping blade a horizontal evaporator (3) coupled to a motor reducer, including a magnetic clutch (6, 8) at the front end of the evaporator (3) between the rotary longitudinal axle (5) and the scraping blade, the longitudinal axle (5) being located inside the evaporator (3), and the magnetic clutch being formed by a primary rotor (6) and a secondary rotor (8), both rotors including one or various magnets (7, 9) with their poles facing each other. **characterized in that** the evaporator (3) comprises a watertight enclosure (4) as an external covering extending from the support (2) of the evaporator (3) to the front end of this evaporator, where the enclosure is closed around the magnetic clutch (6, 8) forming an intermediate cylinder (13), the enclosure being made of a magnetically permeable material.

2. AN ICING MACHINE, according to claim 1, **characterized in that** the primary rotor (6) is preferably cylindrical and is borne at the front end of the axle (5), including around its periphery one or several magnets (7) with their poles oriented outwards,
and **in that** the same primary rotor (6) comprises in its front face a coaxial hole (16) for receiving a stub (11) joined to the enclosure (4) and cooperating to support the rotor, with the interposition of a friction bush (14) surrounding the stub (11),
and **in that** the primary rotor (6) comprises a mechanical fastening (19) for the axle (5) formed by a half-round cross section hole and a side screw (18) lodged in a threaded hole (17).

3. AN ICING MACHINE, according to claims 1 and 2, **characterized in that** the secondary rotor (8) is ring-shaped and is arranged around the primary rotor (6), which is covered by the intermediate cylinder (13) projecting from the enclosure (4) over said primary rotor (6), the secundary rotor (8) including one or various magnets (9) in its internal contour with its or their magnetic poles facing the magnetic poles of magnets (7) of the primary rotor (6),
and **in that** the secundary rotor (8) has a surrounding cover (20) linking it with the helical blade (10),
and **in that** the enclosure (4) comprises a coaxial stub (12) for bearing a centering cylindrical support (15) related to the cover (20) to connect with the blade (10) to aid in its fastening.

## Patentansprüche

1. Eismaschine, beinhaltend einen Magnetantrieb für ein Abstreifblatt, einen horizontalen Verdampfer (3), der an einen Getriebemotor gekoppelt ist und eine Magnetkupplung (6, 8) am vorderen Ende des Verdampfers (3) zwischen der Längsdrehachse (5) und dem Abstreifblatt beinhaltet, wobei die Längsachse (5) im Innern des Verdampfers (3) angeordnet ist und die Magnetkupplung durch einen Primärrotor (6) und einen Sekundärrotor (8) gebildet wird, wobei beide Rotoren einen oder mehrere Magnete (7, 9) mit einander zugewandten Polen beinhalten, **dadurch gekennzeichnet, dass** der Verdampfer (3) ein wasserdichtes Gehäuse (4) als äußere Abdeckung beinhaltet, das sich von dem Träger (2) des Verdampfers (3) bis zum vorderen Ende des Verdampfers erstreckt, wo das Gehäuse die Magnetkupplung (6, 8) umschließt, um einen Zwischenzylinder (13) zu bilden, wobei das Gehäuse aus einem magnetisch permeablen Material hergestellt ist.

2. Eismaschine nach Anspruch 1, **dadurch gekennzeichnet, dass** der Primärrotor (6) vorzugsweise zylindrisch ist, am vorderen Ende der Achse (5) getragen wird und entlang seines Umfangs einen oder mehrere Magnete (7) mit nach außen gerichteten Polen beinhaltet;
dass ferner dieser Primärrotor (6) an seiner Vorderseite eine koaxiale Öffnung (16) zur Aufnahme eines Zapfens (11) beinhaltet, der mit dem Gehäuse (4) verbunden ist und zum Tragen des Rotors beiträgt, wobei eine den Zapfen (11) umhüllende Reibungsbuchse (14) dazwischen angeordnet ist;
und dass ferner der Primärrotor (6) eine mechanische Befestigung (19) für die Achse (5) beinhaltet, die durch eine Öffnung mit halbrundem Querschnitt und eine seitliche Schraube (18), die in einer Gewindebohrung (17) aufgenommen ist, gebildet wird.

3. Eismaschine nach den Ansprüchen 1 und 2, **dadurch gekennzeichnet, dass** der Sekundärrotor (8) ringförmig ist und rund um den Primärrotor (6) angeordnet ist, der durch den Zwischenzylinder (13) abgedeckt ist, der von dem Gehäuse (4) über den Primärrotor (6) hervorragt, wobei der Sekundärrotor (8) einen oder mehrere Magnete (9) in seinem Innenprofil beinhaltet, dessen bzw. deren Magnetpole den Magnetpolen der Magnete (7) des Primärrotors (6) zugewandt sind;
dass ferner der Sekundärrotor (8) eine umhüllende Abdeckung (20) aufweist, die ihn mit dem spiralförmigen Abstreifblatt (10) verbindet;
und dass ferner das Gehäuse (4) einen koaxialen Zapfen (12) zur Lagerung eines mit der Abdeckung (20) verbundenen zentrierenden zylindrischen Trägers (15) zum Anschluss des Abstreifblattes (10) beinhaltet, um dessen Befestigung zu unterstützen.

## Revendications

1. Une machine à glace comprenant un entraînement magnétique pour une lame de raclage, un évaporateur horizontal (3) accouplé avec un motoréducteur, comprenant un embrayage magnétique (6, 8) au niveau de l'extrémité avant dudit évaporateur (3) entre l'axe longitudinal rotatif (5) et la lame de raclage, l'axe longitudinal (5) étant situé à l'intérieur de l'évaporateur (3) et l'embrayage magnétique étant formé par un rotor primaire (6) et un rotor secondaire (8), les deux rotors comprenant un ou plusieurs aimants (7, 9) dont les pôles se font face, ladite machine étant **caractérisée en ce que** l'évaporateur (3) comprend une enveloppe étanche à l'eau (4) comme couverture extérieure qui s'étend depuis le support (2) de l'évaporateur (3) jusqu'à l'extrémité avant de ce même évaporateur, où l'enveloppe est fermée autour de l'embrayage magnétique (6, 8) en formant un cylindre intermédiaire (13), ladite enveloppe étant réalisée dans un matériau magnétiquement perméable.

2. La machine à glace selon la revendication 1, **caractérisée en ce que** le rotor primaire (6) est de préférence cylindrique et est supporté au niveau de l'extrémité avant de l'axe (5), comprenant sur sa périphérie un ou plusieurs aimants (7) dont les pôles sont orientés vers l'extérieur,
et **en ce que** ce même rotor primaire (6) comprend sur sa face avant un trou coaxial (16) destiné à recevoir une cheville (11) associée à l'enveloppe (4) et contribuant au support du rotor, avec interposition d'une douille de friction (14) qui entoure ladite cheville (11),
et **en ce que** le rotor primaire (6) comprend une fixation mécanique (19) pour l'axe (5), formée par un trou de section semi-circulaire et une vis latérale (18) logée dans un trou taraudé (17).

3. La machine à glace selon les revendications 1 et 2, **caractérisée en ce que** le rotor secondaire (8) a une forme annulaire et est disposé autour du rotor primaire (6), qui est couvert par le cylindre intermédiaire (13) saillant de l'enveloppe (4) sur ledit rotor primaire (6), le rotor secondaire (8) comprenant un ou plusieurs aimants (9) sur son contour intérieur avec ses ou leurs pôles magnétiques faisant face aux pôles magnétiques des aimants (7) du rotor primaire (6),
et **en ce que** le rotor secondaire (8) a un chapeau (20) qui l'entoure et le relie à la lame hélicoïdale (10),
et **en ce que** l'enveloppe (4) comprend une cheville coaxiale (12) destinée à supporter un support cylindrique de centrage (15) associé au chapeau (20) à relier à la lame (10), pour en faciliter la fixation.
